(19) **Europäisches Patentamt / European Patent Office / Office européen des brevets**

(11) **EP 4 767 899 A1**

(12) **EUROPEAN PATENT APPLICATION**
published in accordance with Art. 153(4) EPC

(43) Date of publication:
01.07.2026 Bulletin 2026/27

(21) Application number: 24858362.7

(22) Date of filing: 19.08.2024

(51) International Patent Classification (IPC):
*A47L 11/24* (2006.01)    *A47L 11/40* (2006.01)
*H01S 3/02* (2006.01)

(52) Cooperative Patent Classification (CPC):
**A47L 9/2805; A47L 9/2852; A47L 9/30;**
**A47L 11/24; A47L 11/4011; A47L 11/405;**
**A47L 11/4061;** A47L 2201/00; A47L 2201/04

(86) International application number:
**PCT/CN2024/113125**

(87) International publication number:
**WO 2025/044819 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 25.08.2023 CN 202322318458 U

(71) Applicant: **Beijing Roborock Technology Co., Ltd.**
**Beijing 102206 (CN)**

(72) Inventors:
• **LIU, Dan**
**Beijing 102206 (CN)**
• **PAN, Ke**
**Beijing 102206 (CN)**

(74) Representative: **Studio Torta S.p.A.**
**Via Viotti, 9**
**10121 Torino (IT)**

(54) **AUTOMATIC CLEANING DEVICE AND CLEANING SYSTEM**

(57) An automatic cleaning device and a cleaning system. The automatic cleaning device comprises: an automatic cleaning device body (110); and a sensing module (120), the sensing module (120) being disposed on the automatic cleaning device body (110), and the sensing module (120) comprising: a line laser module and an RGB image acquisition module (123), wherein the line laser module is used for emitting line laser light, the emission direction of the line laser light being horizontally and downward inclined, and the line laser module comprises: an emission assembly (121), the emission assembly (121) being used for emitting single-line laser light.

Fig. 2

Description

CROSS REFERENCE TO RELATED APPLICATIONS

The present disclosure claims priority to Chinese Patent Application No. 202322318458.9, filed on August 25, 2023, the entire contents of which are incorporated herein by reference.

TECHNICAL FIELD

Embodiments of the present application relate to the field of automatic cleaning devices, and in particular to an automatic cleaning device and a cleaning system.

BACKGROUND

With the development of technologies, service robots such as cleaning robots, food delivery robots and commercial robots have been increasingly involved in every aspect of life. For all types of robots, the functional requirement for active obstacle avoidance is involved. The functions above require robots capable of accurately avoiding obstacles such as shoes, chairs, and scales in complex environments. At present, the robots are generally based on one scheme or a combination of multiple schemes from the following schemes: a binocular ranging-based obstacle avoidance scheme, a 3D ToF obstacle avoidance scheme, and a structured light obstacle avoidance scheme. However, the binocular ranging-based obstacle avoidance scheme and the 3D ToF obstacle avoidance scheme have low ranging accuracy, and the structured light obstacle avoidance scheme incurs high costs.

SUMMARY

The present disclosure is intended to solve at least one of the technical problems existing in the prior art or related art.

To this end, in a first aspect of the present disclosure, an automatic cleaning device is provided.

In a second aspect of the present disclosure, a cleaning system is provided.

In view of this, according to the first aspect of an embodiment of the present application, an automatic cleaning device is provided. The automatic cleaning device includes:

an automatic cleaning device body; and
a sensing module disposed on the automatic cleaning device body, where the sensing module includes a line laser module and an RGB image acquisition module, and the line laser module is configured for emitting a line laser, and an emission direction of the line laser being horizontally and downward inclined.

In a possible embodiment, the RGB image acquisition module is configured for acquiring environmental image information of the automatic cleaning device body.

In a possible embodiment, the automatic cleaning device further includes:
a processor connected to the line laser module and the RGB image acquisition module.

In a possible embodiment, the line laser module includes:

an emission assembly configured for emitting a single-line laser; and
a receiving assembly configured for acquiring first image information of the laser on an object.

In a possible embodiment, the emission assembly includes:

a drive circuit unit; and
a VCSEL unit, where the drive circuit unit is connected to the VCSEL unit, and the VCSEL unit is configured for emitting the laser.

In a possible embodiment, the emission module further includes:

a focusing lens unit configured for focusing the laser emitted via the VCSEL unit; and
a wave lens unit disposed on a side of the focusing lens unit away from the VCSEL unit.

In a possible embodiment, the receiving assembly includes:

a sensor;
a lens unit configured for imaging, on the sensor, a line laser reflected by the object;
a filter unit disposed on a side of the lens unit away from the sensor; and
a signal processing unit connected to the sensor and configured for converting a photoelectric signal into a digital signal.

In a possible embodiment, the sensing module further includes:

a housing connected to the automatic cleaning device body; and
a bracket configured for connection to the housing, where the line laser module and/or the RGB image acquisition module are connected to the bracket.

In a possible embodiment, the sensing module further includes:
a fill-in light connected to the bracket and configured for filling light for the RGB image acquisition module.

In a possible embodiment, the automatic cleaning device further includes:

a protective lens configured for covering at least one of the RGB image acquisition module, the fill-in light and the line laser module.

In a possible embodiment, a hollow-out portion is formed in a region of the protective lens corresponding to the fill-in light.

In a possible embodiment, a mounting hole is formed in the housing, and the line laser module and/or the RGB image acquisition module send or receive a signal via the mounting hole.

In a possible embodiment, the sensing module further includes:

a pile-finding light receiving module configured for receiving a pile-finding signal emitted by a base station.

In a possible embodiment, the pile-finding light receiving module is disposed on the bracket.

According to the second aspect of an embodiment of the present application, a cleaning system is provided. The cleaning system includes:

the automatic cleaning device in any one of the technical solutions as described above; and

a cleaning base station configured for providing maintenance to the automatic cleaning device.

Compared with the prior art, the present disclosure includes at least the following beneficial effects.

The automatic cleaning device provided in the embodiments of the present application includes the automatic cleaning device body and the sensing module. When in use, the automatic cleaning device body is used for performing a service task and the sensing module is used for navigation for the automatic cleaning device body. When the automatic cleaning device provided in the embodiments of the present application is in use, a laser is emitted by means of the line laser module, and because the output direction of the line laser module is inclined in a ground-hitting direction, when the laser is projected onto an obstacle, the contour of the laser projected undergoes deformation, by which the position of the obstacle can be determined. In addition, because the output direction of the line laser module is inclined in the ground-hitting direction, the laser can be projected to a region in front of the automatic cleaning device body, the projection distance of the laser can be controlled by inclination in the ground-hitting direction, and with the movement of the automatic cleaning device body, the laser can go through the region in front of the automatic cleaning device body. In this way, the obstacle in the horizontal and vertical directions in front of the automatic cleaning device body can be recognized by one line laser, and the distance between the obstacle and the automatic cleaning device body can be determined, which facilitates obstacle avoidance of the automatic cleaning device body. In such a configuration, the obstacle avoidance accuracy is ensured while the cost of obstacle avoidance is reduced. Moreover, the distance to the obstacle can be acquired by means of the line laser module, and the contour of the obstacle can be acquired by means of the RGB image acquisition module. In this way, the combined use of the RGB image acquisition module and the liner laser module allows more accurate determination of surrounding environment information by the automatic cleaning device body, which can improve the obstacle-avoiding and operating effects of the automatic cleaning device body.

**BRIEF DESCRIPTION OF THE DRAWINGS**

Various other advantages and benefits will become clear to those of ordinary skill in the art by reading the detailed description of the preferred embodiments below. The accompanying drawings are for the purpose of illustrating the preferred embodiments only, and are not considered to be a limitation on the present application. Moreover, the same reference sign is used to represent the same element throughout the drawings. In the accompanying drawings:

Fig. 1 is a schematic diagram of the use state of an automatic cleaning device according to an embodiment provided in the present application;

Fig. 2 is a schematic structural diagram of a sensing module of the automatic cleaning device according to an embodiment provided in the present application;

Fig. 3 is a schematic structural block diagram of the sensing module of the automatic cleaning device according to an embodiment provided in the present application;

Fig. 4 is a schematic diagram of the working principle of a wave lens unit of the automatic cleaning device according to an embodiment provided in the present application;

Fig. 5 is a schematic diagram of the working principle of a filter unit of the automatic cleaning device according to an embodiment provided in the present application;

Fig. 6 is a schematic structural diagram of a bracket of the sensing module of the automatic cleaning device according to an embodiment provided in the present application;

Fig. 7 is a schematic flowchart of the steps of a control method for the automatic cleaning device according to an embodiment provided in the present application;

Fig. 8 is a schematic diagram of an obstacle avoidance principle of the control method for the automatic cleaning device according to an embodiment provided in the present application;

Fig. 9 is a schematic diagram of laser emission control of the control method for the automatic cleaning device according to an embodiment provided in the present application;

Fig. 10 is a structural block diagram of a computer-readable storage medium according to an embodiment provided in the present application; and
Fig. 11 is a structural block diagram of an electronic device of an air conditioner according to an embodiment provided in the present application.

The correspondence between reference signs and element names are as follows:

110 Automatic cleaning device body, 120 Sensing module;
121 Emission assembly, 122 Receiving assembly, 123 RGB image acquisition module, 124 Fill-in light, 125 Protective lens, 126 Bracket, 127 Housing, 128 Pile-finding light receiving module;
1211 Drive circuit unit, 1212 VCSEL unit, 1213 Focusing lens unit, 1214 Wave lens unit, 1221 Sensor, 1222 Lens unit, 1223 Filter unit, 1224 Signal processing unit, 1251 Hollow-out portion, 1261 Mounting hole.

## DETAILED DESCRIPTION

For better understanding of the above technical solutions, the technical solutions of the embodiments of the present application are explained in detail below through the accompanying drawings and specific embodiments. It should be understood that the embodiments of the present application and the specific features in the embodiment serve to explain in details the technical solutions of the embodiments of the present application, and are not intended to limit the technical solutions of the present application. The embodiments of the present application and the technical features in the embodiments can be combined with each other without conflict.

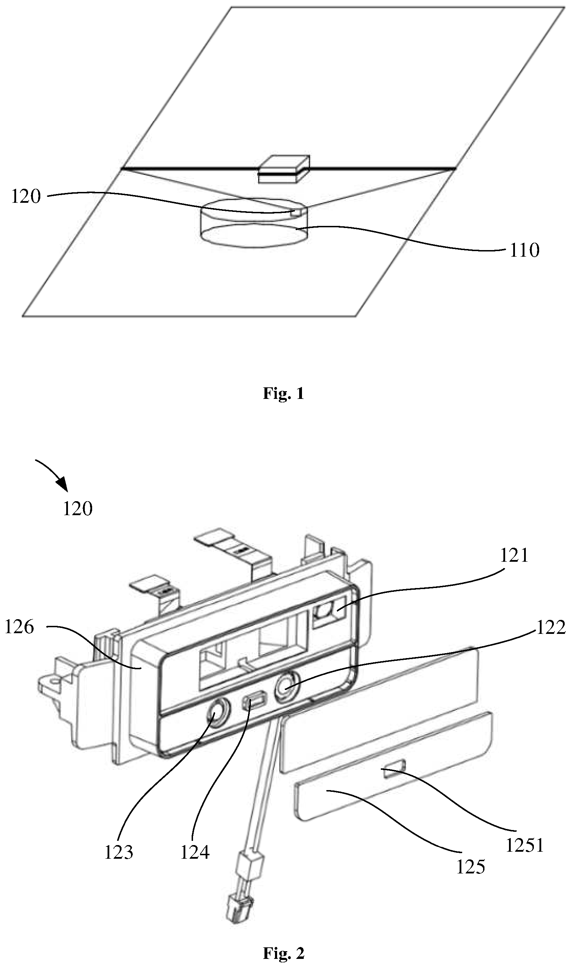

As shown in Fig. 1 to Fig. 6, according to the first aspect of the embodiment of the present application, an automatic cleaning device is provided. The automatic cleaning device includes an automatic cleaning device body 110 and a sensing module 120 disposed on the automatic cleaning device body 110. The sensing module 120 includes a line laser module and an RGB image acquisition module 123. The line laser module is used for emitting a line laser in an emission direction that is horizontally inclined downward.

The automatic cleaning device provided in the embodiment of the present application includes the automatic cleaning device body 110 and the sensing module 120. When in use, the automatic cleaning device body 110 is used for performing a service task, and the sensing module 120 is used for sensing surrounding environment information, specifically including obstacle information acquired by a line laser, an obstacle type recognized by RGB, or other information, for the automatic cleaning device body 110. When the automatic cleaning device provided in the embodiments of the present application is in use, a line laser is emitted by means of the line laser module, and because the output direction of the line laser module is horizontally inclined downward, the output direction of the line laser is inclined in the ground-hitting direction. When the laser is projected onto an obstacle, the contour of the laser projected undergoes deformation (as shown in Fig. 1, the black thick solid line indicates the laser), by which the position of the obstacle can be determined. The line laser can be projected to a region in front of the automatic cleaning device body 110, the projection distance of the laser can be controlled by inclination in the ground-hitting direction, and with the movement of the automatic cleaning device body 110, the laser can go through the region in front of the automatic cleaning device body 110. In this way, the obstacle in the horizontal and vertical directions in front of the automatic cleaning device body 110 can be recognized by one line laser, and the distance between the obstacle and the automatic cleaning device body 110 can be determined, which facilitates obstacle avoidance of the automatic cleaning device body 110. In such a configuration, the obstacle avoidance accuracy is ensured while the cost of obstacle avoidance is reduced.

In the automatic cleaning device provided in the embodiment of the present application, the sensing module 120 may further include an RGB image acquisition module 123 (an RGB camera). When in use, the RGB image acquisition module 123 and a receiving module may be used in combination for joint obstacle avoidance. For example, an environmental picture can be taken as second image information by means of the RGB image acquisition module 123, and the contour of an object in the second image information is recognized by analyzing the second image, such that the type of the obstacle can be determined. In addition, the distance to the obstacle can be determined by means of first image information acquired by the line laser module. In this way, the operation of the automatic cleaning device body 110 is jointly controlled by means of the distance to the obstacle and the type of the obstacle, which can improve the operation quality of the automatic cleaning device body 110. Taking the automatic cleaning device body 110 as a cleaning device body and slippers and a weight scale, that are common in a home scene, as obstacles by way of example, the automatic cleaning device first takes an environmental picture by means of the RGB image acquisition module 123, and then recognizes, through contour matching, irregular obstacles such as slippers in front of the automatic cleaning device. Next, the obstacle avoidance strategy is executed in a collision-free mode by selecting a point at the irregular contour of the slippers closest to the cleaning device body in conjunction with the point cloud data of triangulation ranging by an emission assembly 121 and a receiving assembly 122. If the RGB image acquisition module 123 recognizes that the obstacle in front of the cleaning device body is a weight scale or other regular obstacles, the point cloud data of the triangulation ranging system of the emission assembly 121 and the receiving assembly 122 can be invoked to select a close-fitting mode or a leakage-proof cleaning mode to execute the obstacle avoidance strategy. In this way, the obstacle-avoiding and operating effects of the automatic cleaning device body 110 can be improved through the combined obstacle avoidance operation by the RGB image acquisition module 123, the emission assembly 121 and the receiving assembly 122.

In the traditional technology, some schemes involve binocular vision for navigation and obstacle avoidance. Similar to the basic principle of human eyes, the binocular vision works as follows: two parallel IR (infrared) cameras are used to take images; then, the distance to a specified point is calculated using a series of complex algorithms based on the difference (parallax) between two images; and in case of sufficient data, a depth map may further be generated for calculating the position of an obstacle from a machine, thereby achieving intelligent obstacle avoidance. This scheme has high requirements for the relative position of two cameras for binocular obstacle avoidance, and pixel-level accuracy needs to be achieved for binocular position calibration, leading to great difficulty in manufacturing. Furthermore, according to the principle of binocular vision, the feature points of the pictures taken by the two cameras need to be identified and matched for triangulation ranging. However, matching cannot be achieved for white walls or other obstacles without feature points, resulting in a ranging failure, and the requirement for accurate obstacle avoidance cannot be met. In the automatic cleaning device provided in the embodiment of the present application, the emission assembly 121 of the sensing module 120 emits a laser in a ground-hitting direction, the position of an obstacle in front of the automatic cleaning device body 110 can be further determined based on the projection state of the laser, and the obstacle avoidance requirement can be met even only by emitting a line laser, thereby achieving low cost and high accuracy.

In the traditional technology, some schemes take advantage of a 3D ToF obstacle avoidance scheme for navigation and obstacle avoidance, of which the principle is as follows: a high-frequency light pulse is emitted to an object by using an infrared light source, the light pulse reflected back from the object is then received, and the distance from the detected object to a camera is calculated by detecting the flight (round-trip) time of the light pulse and the speed of light. The disadvantage of this scheme lies in that: a TOF sensor is expensive, and generally costs more than 100 yuan in order to meet the resolution requirement for obstacle avoidance of the automatic cleaning device body; moreover, limited by the timer TDC accuracy (nS-level), the short-range ranging accuracy is low, which is generally about 10 mm; meanwhile, it is likely to mismeasure the reflected light as the actual light in a reflective environment, resulting in inconsistent optical distance, and consequently inaccurately calculated time and large ranging error. In the automatic cleaning device provided in the embodiment of the present application, the emission assembly 121 of the sensing module 120 emits a laser in a ground-hitting direction, the position of an obstacle in front of the automatic cleaning device body 110 can be further determined based on the projection state of the laser, and the obstacle avoidance requirement can be met even only by emitting a line laser, thereby achieving low cost and high accuracy.

In the traditional technology, some schemes are active obstacle avoidance schemes based on structured light. In the ordinary binocular ranging, a light source is ambient light or white light or other light sources without encoding, and image recognition completely depends on the feature points of the photographed object itself, so matching has always been a challenge for binocular ranging. The structured light ranging, on the other hand, differs in that the projected light source is encoded, or characterized. Hence, the image generated by projecting the encoded light source onto an object and modulating the same by the depth of the surface of the object is taken. Because the structured light source is provided with a lot of feature points or is encoded, a lot of matching angular points or direct codewords are provided, such that the feature points can be matched conveniently. In other words, the structured light actively provides a lot of feature points for matching or directly provides codewords, eliminating the need for the feature points on the photographed object itself, such that a better matching result can be provided. The disadvantage of this scheme lies in that: the structured light is susceptible to sunlight, the power is limited under the premise of ensuring the safety of human eyes, and it is likely to flood speckles in case of strong ambient sunlight, resulting in a ranging failure; and the structured light is equivalently achieved by adding a speckle projector on the base of binocular ranging, leading to high cost. While in the present application, the emission assembly 121 of the sensing module 120 emits a laser in the ground-hitting direction, and the laser is thus less susceptible to sunlight or ambient light; and the position of an obstacle in front of the automatic cleaning device body 110 can be further determined based on the projection state of the laser, and the obstacle avoidance requirement can be met even only by emitting a line laser, thereby achieving low cost and high accuracy.

It can be understood that, taking the automatic cleaning device body 110 of the automatic cleaning device moving on the horizontal plane as an example, the output direction of the emission assembly 121 being inclined in the ground-hitting direction means that the output direction of the emission assembly 121 is inclined towards the ground relative to the horizontal direction.

At present, some automatic cleaning device bodies involve a laser-based obstacle avoidance scheme, for example, a double-vertical-line laser is used in some automatic cleaning device bodies, in which case, if an obstacle exists on the lines of the double-line laser, the light is reflected to form an inflection point, and the distance to the obstacle is determined by comparing images for a difference, such that the obstacle is successfully avoided. However, there is a dead zone in the horizontal direction for two-vertical-line structured light, and if there is an obstacle, the automatic cleaning device body cannot avoid the obstacle. Moreover, the double-line laser is costly. In the automatic cleaning device provided in the embodiment of the present application, the emission assembly 121 of the sensing module 120 emits a laser in a ground-hitting direction, the laser is projected in a ground-hitting way, the position of an obstacle in front of the automatic cleaning device body 110 can be further determined based on the projection state of the laser, and the obstacle avoidance requirement can be met even only by emitting a line laser, thereby achieving low cost and high accuracy.

As shown in Fig. 2, in a possible embodiment, the output direction of the emission assembly 121 is inclined at an angle ranging from 7.5° to 15° in the ground-hitting direction.

In this technical solution, the angular range of the inclination direction of the emission assembly 121 is further provided, and the inclination angle of the output direction of the emission assembly 121 in the ground-hitting direction ranges from 7.5° to 15°. In such a configuration, the projection mode of the laser is further clarified, and the projection distance of the laser in front of the automatic cleaning device body 110 can be controlled, such that the projection distance is controlled within a reasonable range, to ensure that the projection state of the laser is easily captured by the automatic cleaning device, while providing enough time for the automatic cleaning device body to avoid the obstacle. It can be understood that, if the inclination angle of the output direction of the emission assembly 121 in the ground-hitting direction is less than 7.5°, the projection distance of the laser may be excessively large to reduce the effective power of the laser and then lead to reduced obstacle avoidance accuracy, meanwhile, it is possible to project the laser into human eyes to bring discomfort to a user. If the inclination angle of the output direction of the emission assembly 121 in the ground-hitting direction is greater than 15°, the projection distance of the laser may be excessively small to lead to reduced efficiency in determining the distance to the obstacle, or even make it impossible for the automatic cleaning device body 110 to avoid the obstacle due to insufficient time.

In a possible embodiment, the RGB image acquisition module 123 is used for acquiring environmental image information of the automatic cleaning device body 110. In this way, the environment image information is taken as second image information, the contour of an object in the second image information is recognized by analyzing the second image, such that the type of the obstacle can be determined. In addition, the distance to the obstacle can be determined by means of first image information acquired by the line laser module. In this way, the operation of the automatic cleaning device body 110 is jointly controlled by means of the distance to the obstacle and the type of the obstacle, which can improve the operation quality of the automatic cleaning device body 110. Taking the automatic cleaning device body 110 as a cleaning device body and slippers and a weight scale, that are common in a home scene, as obstacles by way of example, the automatic cleaning device first takes an environmental picture by means of the RGB image acquisition module 123, and then recognizes, through contour matching, irregular obstacles such as slippers in front of the automatic cleaning device. Next, the obstacle avoidance strategy is executed in a collision-free mode by selecting a point at the irregular contour of the slippers closest to the cleaning device body in conjunction with the point cloud data of triangulation ranging by the emission assembly 121 and the receiving assembly 122. If the RGB image acquisition module 123 recognizes that the obstacle in front of the cleaning device body is a weight scale or other regular obstacles, the point cloud data of the triangulation ranging system of the emission assembly 121 and the receiving assembly 122 can be invoked to select a close-fitting mode or a leakage-proof cleaning mode to execute the obstacle avoidance strategy. In this way, the obstacle-avoiding and operating effects of the automatic cleaning device body 110 can be improved through the combined obstacle avoidance operation by the RGB image acquisition module 123, the emission assembly 121 and the receiving assembly 122.

In a possible embodiment, the automatic cleaning device further includes: a processor connected to the line laser module and the RGB image acquisition module 123. In such a configuration, it is convenient for the processor to acquire obstacle position information based on a line laser, and recognize the obstacle type based on the RGB image acquisition module 123, allowing the automatic cleaning device body to accurately acquire the surrounding environment and then work accurately. The processor can be configured to execute the obstacle avoidance strategy based on information obtained from the line laser module and the RGB image acquisition module 123.

In a possible embodiment, the line laser module includes: an emission assembly 121 for emitting a single-line laser; and a receiving assembly 122 for acquiring first image information of the laser on an object.

In this technical solution, the emission assembly 121 is used for emitting a single-line laser. In such a configuration, it is possible to further reduce the cost of the sensing module 120, thereby reducing the cost of automatic cleaning device while ensuring the obstacle avoidance effect.

In this technical solution, a line laser is emitted by means of the emission assembly 121, the massive speckle projection scheme of structured light is simplified into single-line structured light, and the power is concentrated on one line laser under the power limit that ensures the human eye safety, such that the power density of the laser, the signal-to-noise ratio and the strong light resistance can be improved.

In some examples, the emission assembly 121 is used for emitting a line laser that is projected in a ground-hitting manner, in such a configuration that the line laser bends when projected onto an obstacle, allowing determination of the position of the obstacle based on the state of bending.

In this technical solution, the sensing module 120 may further include a receiving assembly 122, by which the first image information of the laser on the object is received, and the first image information is then analyzed to determine the position of the obstacle and the distance to the obstacle, thereby facilitating navigation for the movement of the automatic cleaning device body 110.

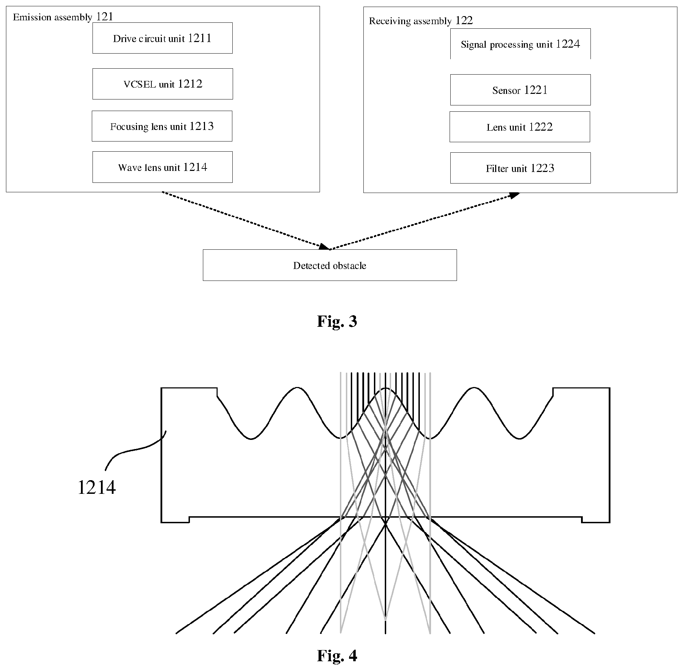

As shown in Fig. 3, in a possible embodiment, the emission assembly 121 includes a drive circuit unit 1211 and a VCSEL unit 1212. The drive circuit unit 1211 is connected to the VCSEL unit 1212, and the VCSEL unit 1212 is used for emitting a laser.

In this technical solution, the structural composition of the emission assembly 121 is further provided. The emission assembly 121 may include the drive circuit unit 1211 and the VCSEL unit 1212 (vertical cavity surface-emitting laser). The drive circuit unit 1211 is used for driving the VCSEL unit 1212 to emit a line laser. It can be understood that the VCSEL unit 1212 is inclined in the ground-hitting direction, in such a configuration that the line laser emitted by the VCSEL unit 1212 can be projected on a region in front of the automatic cleaning device body 110 to facilitate obstacle avoidance for the automatic cleaning device body 110.

It can be understood that the drive circuit unit 1211 is used for supplying suitable drive voltage and current to the VCSEL unit 1212 to allow photoelectric conversion by the VCSEL unit 1212. The luminous intensity of the emission assembly 121 is in a linear relationship with the drive current, and accordingly, the response distance of the emission assembly 121 and the receiving assembly 122 can be effectively controlled by controlling the drive current of the drive circuit unit 1211, in order to fulfill the function of remote obstacle detection for the automatic cleaning device.

In some examples, the wavelength of the VCSEL unit 1212 may be 940nm, 850nm, 808nm or other wavelength in infrared bands, and the key VCSEL indicators include luminous intensity at rated current, divergence angle (i.e., field of view, FOV), and external dimension. Here, the luminous intensity affects the sensing distance, and the divergence angle affects the line width of the line laser. The center of mass cannot be accurately calculated if the line width is too small to occupy more than 1 pixel in the image. In case of detecting an obstacle with a dark color, the reflected energy tends to be low if the line width is too large which easily causes reduced energy density, making it impossible to perform effective detection. The common line width is 1-5mm at a focusing position. The external dimensions mainly affect the structural design, in which the smaller the structure, the easier the miniaturization of the device, and can directly improve the emission distance and receiving distance, thereby improving the accuracy of triangulation ranging.

In some examples, the VCSEL unit 1212 has the wavelength of 850nm and the FOV of 18°, and has VCSEL chips, with the size of $\varphi$5 mm, arranged on a circular ceramic substrate, which can ensure the accuracy of triangulation ranging.

In a possible embodiment, the emission assembly 121 further includes: a focusing lens unit 1213 for focusing a laser emitted via the VCSEL unit 1212; and a wave lens unit 1214 disposed on the side of the focusing lens unit 1213 away from the VCSEL unit 1212.

In this technical solution, the structural composition of the emission assembly 121 is further provided. The emission assembly 121 may include the focusing lens unit 1213 to further focus the circular spot of the VCSEL unit 1212. The line width of the line laser may be flexibly controlled by setting the focal length of the focusing lens unit 1213 and adjusting the object distance of the VCSEL unit 1212. The focusing lens unit 1213 may be spherical or aspherical. In this embodiment, due to small divergence angle of the VCSEL unit 1212, a spherical lens is used for cost performance.

In this technical solution, the emission assembly 121 may further include the wave lens unit 1214, by which the focused laser is projected and which may linearize a point laser, such that the laser can be projected in a linear shape.

As shown in Fig. 4, in some examples, the focused circular laser spot passes through the wave lens, and multiple light rays passing through crests and troughs are emitted vertically to a line center. The light ray subjected to the crest-to-trough depth of 0.5 has the largest emergence angle to reach a line edge. For the light rays subjected to the crests (troughs) and the crest-to-trough depth of 0.5, multiple waves of light are superimposed and emitted to the line center and edge depending on position, thereby forming the line. The emission of a single-line laser can be achieved as long as the wave surface shape with the perpendicularity of 90° is designed on the wave lens at the same time. In order to improve the detection angle for obstacle avoidance, the emission assembly 121 provided in the embodiment of the present application has the laser divergence angle of 130°.

In a possible embodiment, the receiving assembly 122 includes: a sensor 1221; a lens unit 1222 for imaging, on the sensor 1221, the line laser reflected by an object; a filter unit 1223 disposed on the side of the lens unit 1222 away from the sensor 1221; and a signal processing unit 1224 connected to the sensor 1221 and used for converting a photoelectric signal into a digital signal.

In this technical solution, the structural composition of the receiving assembly 122 is further provided. The receiving assembly 122 may include the lens unit 1222, the sensor 1221 and the filter unit 1223. When the first image information is acquired by means of the receiving assembly 122, light rays first pass through the filter unit 1223, which can only allow the light of the corresponding wavelength to pass through, but cut off the light of other wavelengths, thereby preventing serious stray light in the image caused by receiving ambient light, which can improve the signal-to-noise ratio of the system.

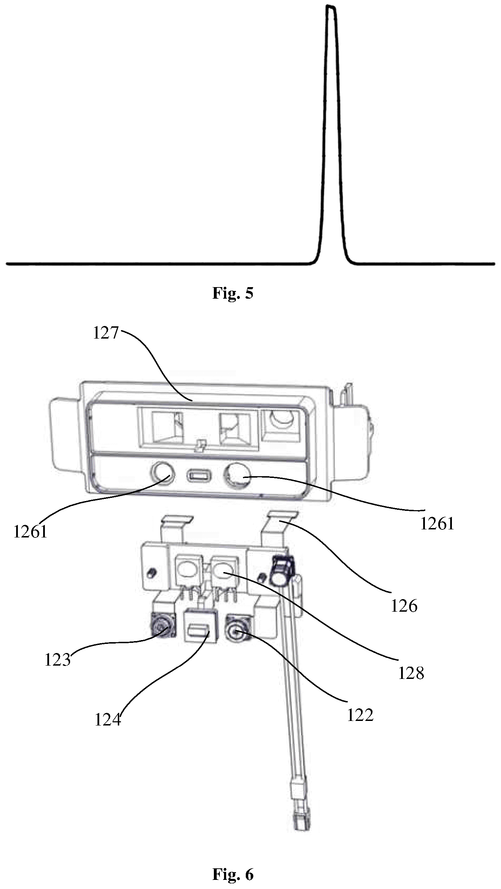

In some examples, as shown in Fig. 5, the abscissa indicates the wavelength, the ordinate indicates the signal receiving intensity, and the filter unit 1223 can be a narrow-band filter, such as a narrow-band filter with a wavelength of 850nm $\pm$ 10nm. In this way, only the light of the corresponding wavelength is allowed to pass through, and the light of other wavelengths is cut off, thereby preventing serious stray light in the image caused by receiving ambient light. The narrowband filter can improve the signal-to-noise ratio of the system.

In this technical solution, the lens unit 1222 is disposed to image, on the sensor 1221, the line laser reflected by the obstacle. The key indicators of the lens unit 1222 include field of view, f-number (F#), focal length, distortion or the like. In this embodiment, a lens with a large field of view of 120° is used to allow for obstacle detection in a larger range; the focal length is 1.6 mm, where the larger the focal length, the higher the ranging accuracy according to the triangulation ranging formula; F# is 2.2, where with constant focal length, the smaller the F#, the larger the lens aperture, and the larger the amount of input light; and the distortion is 2.5%, where the smaller the distortion, the better, and the excessive distortion is likely to affect the edge ranging accuracy. In case of excessive original distortion, the distortion may also be calibrated by means of internal reference calibration, but at the expense of the effective FOV.

In this technical solution, the sensor 1221 may be a sensor which is a sensing chip, with the main indicators including resolution, exposure mode, pixel size, photosensitive efficiency and the like. According to the triangulation ranging formula, the higher the resolution, the higher the ranging accuracy, but with increasing cost. The exposure mode is categorized into rolling exposure and global exposure which is more suitable for fast-moving scenes. The sensing module 120 in the present application needs to be applied to the movable automatic cleaning device body 110 and strictly matched with the line laser in timing, and thus the sensor with the VGA resolution and the rolling exposure mode is used in this embodiment. The larger the pixel size, the better the photosensitive property, and thus the pixel size of 3.75um is used in this embodiment. The higher the photosensitive efficiency, the higher the photoelectric conversion efficiency with the same emission power, the brighter the line laser presented in the image, and the more conducive to the implementation of dark materials and long-distance ranging, and thus, the sensor with the photosensitive efficiency of 40% is used in this embodiment.

In this technical solution, the signal processing unit 1224 is used for converting the photocurrent signal of the infrared receiving unit into a digital signal, which is then sent to the processor of the automatic cleaning device for decoding so as to present a completed image, and the position of the center of mass is calculated, thereby completing the calculation of triangulation ranging.

It can be understood that the sensor 1221, the lens unit 1222 and the filter unit 1223 are combined to form an IR (infrared) camera.

As shown in Fig. 6, in a possible embodiment, the sensing module 120 further includes: a housing 127 connected to the automatic cleaning device body 110; a bracket 126 for connection to the housing 127. The line laser module and/or the RGB image acquisition module 123 are connected to the bracket 126.

In this technical solution, the structural composition of the sensing module is further provided. The sensing module may include the housing 127 and the bracket 126. The bracket 126 may provide installation positions for the line laser module and/or the RGB image acquisition module 123. During assembling, the line laser module and/or the RGB image acquisition module 123 may be first assembled on the bracket 126, which is then connected to the housing 127, and finally, the housing 127 is connected to the automatic cleaning device body 110. In this way, the modular assembling of the sensing module can be achieved, which is convenient for the precise positioning of the line laser module and/or the RGB image acquisition module 123.

In a possible embodiment, the sensing module 120 further includes: a fill-in light 124 connected to the bracket 126 and used for filling light for the RGB image acquisition module 123.

In this technical solution, the sensing module may further include the fill-in light 124, by which the light can be filled for the RGB image acquisition module 123, such that the RGB image acquisition module 123 can acquire the environment image information with more appropriate brightness, making it possible to more accurately determine the type of obstacle.

In a possible embodiment, the automatic cleaning device further includes: a protective lens 125 for covering at least one of: the RGB image acquisition module 123, the fill-in light 124, and the line laser module.

In this technical solution, the automatic cleaning device may further include the protective lens 125, which covers at least one of the RGB image acquisition module 123, the fill-in light 124, and the line laser module to achieve dustproof and waterproof effects, such that the service life of the sensing module can be prolonged while the sensing accuracy can be increased.

In some examples, the protective lens 125 may be prepared from a single lens or by stacking a plurality of lenses.

In a possible embodiment, a hollow-out portion 1251 is formed in a region of the protective lens 125 corresponding to the fill-in light 124, in such a configuration that the light transmittance of the fill-in light 214 can be improved to guarantee the intensity of filled light.

In a possible embodiment, a mounting hole 1261 is formed in the housing 127, and the line laser module and/or the RGB image acquisition module 123 send or receive a signal via the mounting hole 1261.

By forming the mounting hole 1261 in the housing 127, the aperture of the mounting hole 1261 may be slightly larger than the line laser module and/or the RGB image acquisition module 123, so as to facilitate the signal emitting and receiving by the line laser module and/or the RGB image acquisition module 123 and the accurate acquisition of the position and contour of the obstacle, allowing more accurate operation of the automatic cleaning device body 110.

In a possible embodiment, the sensing module 120 further includes:

a pile-finding light receiving module 128 for receiving a pile-finding signal emitted by a base station.

In this technical solution, the sensing module may further include the pile-finding light receiving module 128, which is provided to facilitate receiving of a pile-finding signal emitted by the base station, so as to enable the automatic cleaning device body 110 to return to the base station according to the received signal, facilitating the smooth conduction of operations such as charging, dust collection, cleaning.

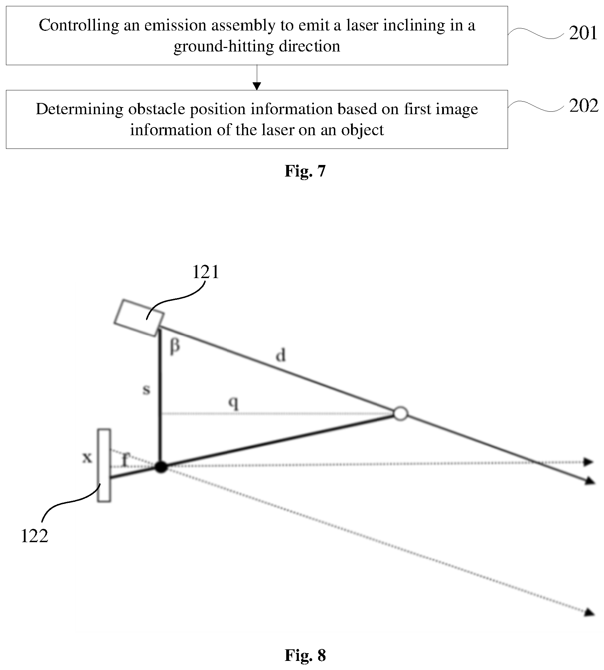

As shown in Fig. 7, according to the second aspect of the embodiment of the present application, a control method is provided for controlling the automatic cleaning device in any one of the technical solutions as described above. The control method includes:

In step 201, an emission assembly is controlled to emit a laser inclining in a ground-hitting direction. Understandably, due to the inclination configuration of the emission assembly, a laser inclined in the ground-hitting direction can be emitted just by turning on the emission assembly.

In step 202, obstacle position information is determined based on first image information of the laser on an object. It can be understood that, when the laser in the ground-hitting direction is projected onto an obstacle, the laser bends, and the position of the obstacle can be determined by means of the state of bending.

The control method provided in the embodiment of the present application is used for controlling the automatic cleaning device in any one of the technical solutions as described above, and thus has all the beneficial effects of the cleaning device in the above technical solutions.

In the control method provided in the embodiments of the present application, a laser is emitted by means of the emission assembly 121, and because the output direction of the emission assembly 121 is inclined in the ground-hitting direction, when the laser is projected onto an obstacle, the contour of the laser projected undergoes deformation, by which the position of the obstacle can be determined. In addition, because the output direction of the emission assembly 121 is inclined in the ground-hitting direction, the laser can be projected to a region in front of the automatic cleaning device body 110, and the projection distance of the laser can be controlled by inclination in the ground-hitting direction, and with the movement of the automatic cleaning device body 110, the laser can go through the region in front of the automatic cleaning device body 110. In this way, the obstacle in the horizontal and vertical directions in front of the automatic cleaning device body 110 can be recognized by one line laser, and the distance between the obstacle and the automatic cleaning device body 110 can be determined, which facilitates obstacle avoidance of the cleaning device body. In such a configuration, the obstacle avoidance accuracy is ensured while the cost of obstacle avoidance is reduced.

In a possible embodiment, the step of controlling the emission assembly to emit the laser inclining in the ground-hitting direction includes: controlling the receiving assembly to be turned on every time interval; and controlling the emission assembly to be turned on every two time intervals, where the receiving assembly is turned on synchronously when the emission assembly is turned on.

In this technical solution, the control mode of laser emission is further provided. The receiving assembly 122 is turned on once every time interval, that is to say, the receiving assembly 122 acquires the first image information once every time interval. The emission assembly 121 is turned on once every two time intervals, that is to say, the laser is emitted by the emission assembly 121 once every two time intervals. In this way, taking four time intervals as an example, the receiving assembly 122 is turned on four times, and the emission assembly 121 is turned on twice. In this way, four pieces of first image information may be acquired, wherein two pieces of first image information include the projection results of laser. In this way, the four pieces of first image information can be compared to eliminate the influence from ambient light to thus accurately recognize the projection state of the laser, such that the position information of the obstacle can be determined. The movement trend between the automatic cleaning device body 110 and the obstacle can be determined simultaneously.

In the automatic cleaning device provided in the embodiment of the present application, the output direction of the emission assembly 121 is inclined at an angle ranging from 7.5° to 15° in the ground-hitting direction, and obstacles in the vertical and horizontal directions may be detected simultaneously. Moreover, by setting the time interval and controlling the receiving assembly 122 to be turned on at intervals, the high-cost global exposure scheme is replaced by a rolling shutter scheme, such that the cost performance is guaranteed. Rolling shutter is characterized by the gradual exposure of CMOS pixels (diodes). That is, the CMOS pixels are exposed one after another, which has the advantage of achieving a higher frame rate, but with the disadvantage of phenomena such as Jello effects caused by partial exposure (partial exposure), skewing(skew) and wobbling(wobble) when the receiving assembly 122 moves quickly. However, the moving speed of the automatic cleaning device is generally below 30cm/s, which is much lower than the exposure speed at the ms-level or even the us-level of the selected rolling shutter, avoiding the Jello effect. The global shutter is characterized by the fact that the entire scene is exposed at the same time. All pixel points (diodes) of the sensor 1221 acquire light rays at the same time and are exposed at the same time. Unlike rolling shutter, such a simultaneous exposure does not undergo the Jello effect. However, for chips with the same resolution, the cost of the rolling shutter is only 50% of that of the global shutter, such that the cost performance of the obstacle avoidance system of the automatic cleaning device can be greatly improved.

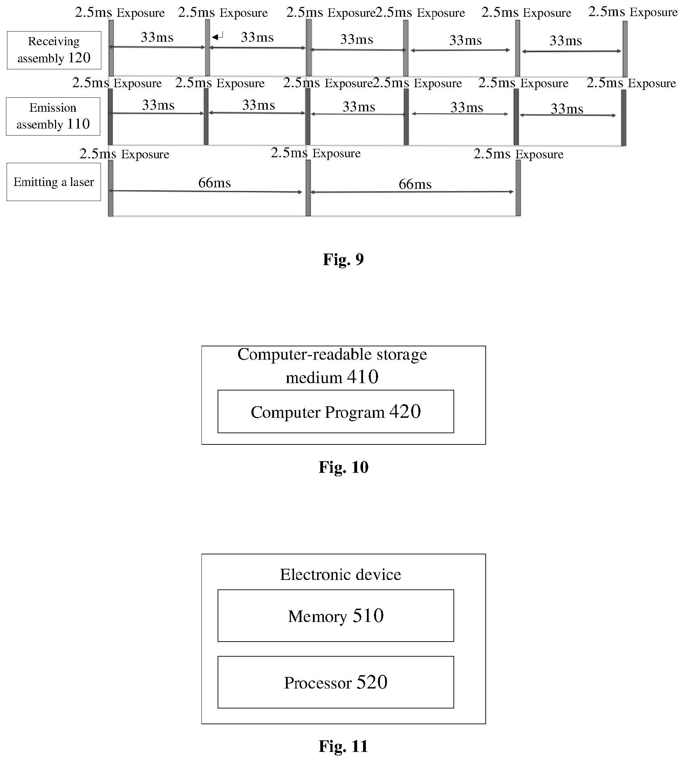

As shown in Fig. 9, the receiving assembly 122 initiates the exposure for 2.5 ms and simultaneously sends a synchronization signal to the emission assembly 121, and after an interval of 33ms, the receiving assembly 122 initiates the second exposure for 2.5ms. The horizontal line laser of the emission assembly 121 is emitted at intervals according to the synchronization signal, and the emission time of the emission assembly 121 is strictly matched with the exposure time of the receiving assembly 122, such that the effective brightness of the line laser in the image can be ensured, and the overall emission time of the line laser can be reduced, thereby meeting the standard of laser safety to human eyes.

In a possible embodiment, the step of determining the obstacle position information based on the first image information of the laser on the object includes: determining a distance between the obstacle and the sensing module 120 by the following formula:

$$q = fs / x.$$

Here, q indicates the distance between the obstacle and the automatic cleaning device body 110, *f* indicates the focal length of the receiving assembly 122, s indicates the distance between the center of the emission assembly 121 and the center of the receiving assembly 122, and x indicates the distance from the pixel point of the sensor 1221 of the sensing module 120 to the center of the sensor 1221.

In this technical solution, a method for determining the distance to an obstacle is further provided, and as shown in Fig. 1 and Fig. 2, the emission assembly 121 and the receiving assembly 122 are included in this technical solution. The emission assembly 121 is used for emitting one or more lasers (which may be line lasers or lasers of other shape, and this embodiment takes a single-horizontal-line laser as an example). The receiving assembly 122 may be a CCD or CMOSIR (infrared) camera, and the distance between the automatic cleaning device body and the obstacle is detected by means of triangulation ranging. The principle of triangulation ranging is shown in Fig. 8, where the measured distance is

$q=fs/x$ according to the similar triangles, with q indicating the distance between the emitting and receiving center and the obstacle, *f* indicating the focal length of the receiving assembly 122, s indicating the distance between the center of the emission assembly 121 and the center of the receiving assembly 122, and x indicating the distance from the center of the imaging chip sensor to the pixel point on the imaging chip sensor of the receiving assembly 122 to which the laser emitted by the emission assembly 121 is reflected from the surface of an obstacle. The distance between the obstacle and the sensing module 120 is determined based on the focal length of the receiving assembly 122, the distance between the emission assembly 121 and the receiving assembly 122 and the detecting results of the sensor 1221, such that the position of the obstacle can be accurately determined to facilitate obstacle avoidance for a device or means provided with the sensing module.

In a possible embodiment, the control method further includes: acquiring second image information by means of an RGB image acquisition module; determining obstacle type information based on the second image information; and determining a travel path of the automatic cleaning device body based on the obstacle position information and obstacle type information.

In this technical solution, the control method may further include acquiring the type of obstacle by the RGB image acquisition module 12, where the RGB image acquisition module 123 may be used in combination with the receiving module for joint obstacle avoidance. For example, an environment picture may be taken as the second image information by the RGB image acquisition module 123, and the contour of an object in the second image information is recognized by analyzing the second image, such that the type of obstacle may be determined. The distance to the obstacle may be determined by means of first image information acquired by the receiving module. In this way, the operation of the automatic cleaning device body 110 is jointly controlled by means of the distance to the obstacle and the type of the obstacle, which can improve the operation quality of the automatic cleaning device body 110. Taking the automatic cleaning device body 110 as a cleaning device body and slippers and a weight scale, that are common in a home scene, as obstacles by way of example, the automatic cleaning device first takes an environmental picture by means of the RGB image acquisition module 123, and then recognizes, through contour matching, irregular obstacles such as slippers in front of the automatic cleaning device. Next, the obstacle avoidance strategy is executed in a collision-free mode by selecting a point at the irregular contour of the slippers closest to the cleaning device body in conjunction with the point cloud data of triangulation ranging by the emission assembly 121 and the receiving assembly 122. If the RGB image acquisition module 123 recognizes that the obstacle in front of the cleaning device body is a weight scale or other regular obstacles, the point cloud data of the triangulation ranging system of the emission assembly 121 and the receiving assembly 122 can be invoked to select a close-fitting mode or a leakage-proof cleaning mode to execute the obstacle avoidance strategy. In this way, the obstacle-avoiding and operating effects of the automatic cleaning device body 110 can be improved through the combined obstacle avoidance operation by the RGB image acquisition module 123, the emission assembly 121 and the receiving assembly 122.

In a possible embodiment, the step of determining the travel path of the automatic cleaning device body includes: controlling the automatic cleaning device body to maintain in the current travel direction when no obstacle exists in front of the automatic cleaning device body; and changing the travel path of the automatic cleaning device body when the obstacle position information indicates an obstacle in the horizontal direction, causing the automatic cleaning device body to bypass the obstacle.

In this technical solution, a specific step of determining the travel path of the automatic cleaning device body 110 is further provided, in which when no obstacle exists in front of the automatic cleaning device body 110, the automatic cleaning device body 110 is controlled to maintain in the current travel direction, so as to control the automatic cleaning device body 110 to perform an operation task as soon as possible; and when the obstacle position information indicates an obstacle in the horizontal direction, the travel path of the automatic cleaning device body is changed to cause the automatic cleaning device body 110 to bypass the obstacle, making it possible to avoid collisions between the automatic cleaning device body 110 and the obstacle.

As shown in Fig. 10, according to a third aspect of the embodiment of the present application, a computer-readable storage medium 410 is provided. The computer-readable storage medium 410 stores a computer program 420 to implement the control method in any one of the above technical solutions as described above.

Because the computer-readable storage medium 410 provided in the embodiment of the present application implements the control method in any one of the technical solutions as described above, the computer-readable storage medium 410 has all the beneficial effects of the control methods in the technical solutions as described above.

By the computer-readable storage medium 410 provided in the embodiments of the present application, a laser is emitted by means of the emission assembly 121, and because the output direction of the emission assembly 121 is inclined in the ground-hitting direction, when the laser is projected onto an obstacle, the contour of the laser projected undergoes deformation, by which the position of the obstacle can be determined. In addition, because the output direction of the emission assembly 121 is inclined in the ground-hitting direction, the laser can be projected to a region in front of the automatic cleaning device body 110, and the projection distance of the laser can be controlled by inclination in the ground-hitting direction, and with the movement of the automatic cleaning device body 110, the laser can go through the region in front of the automatic cleaning device body 110. In this way, the obstacle in the horizontal and vertical directions in front of the automatic cleaning device body 110 can be recognized by one line laser, and the distance between the obstacle and the automatic cleaning device body 110 can be determined, which facilitates obstacle avoidance of the cleaning device body. In such a configuration, the obstacle avoidance accuracy is ensured while the cost of obstacle avoidance is reduced.

Based on such an understanding, the technical solutions of the present application can be embodied in the form of a software product, which may be stored in a non-volatile storage medium (which may be a CD-ROM, a USB flash disk, a portable hard disk, or the like), and include a number of instructions to cause a computer device (which may be a personal computer, a server, or a network device, or the like) to perform the method described in each implementation scene of the present application.

As shown in Fig. 11, according to a fourth aspect of the embodiment of the present application, an electronic device is provided. The electronic device includes: a memory 510 storing a computer program 420; and a processor 520 capable of executing the computer program 420, where the processor 520, when executing the computer program 420, implements the control method in any one of the technical solutions as described above.

Because the electronic device provided in the embodiment of the present application implements the control method in any one of the technical solutions as described above, the electronic device has all the beneficial effects of the control methods in the technical solutions as described above.

According to the electronic device provided in the embodiments of the present application, a laser is emitted by means of the emission assembly 121, and because the output direction of the emission assembly 121 is inclined in the ground-hitting direction, when the laser is projected onto an obstacle, the contour of the laser projected undergoes deformation, by which the position of the obstacle can be determined. In addition, because the output direction of the emission assembly 121 is inclined in the ground-hitting direction, the laser can be projected to a region in front of the automatic cleaning device body 110, and the projection distance of the laser can be controlled by inclination in the ground-hitting direction, and with the movement of the automatic cleaning device body 110, the laser can go through the region in front of the automatic cleaning device body 110. In this way, the obstacle in the horizontal and vertical directions in front of the automatic cleaning device body 110 can be recognized by one line laser, and the distance between the obstacle and the automatic cleaning device body 110 can be determined, which facilitates obstacle avoidance of the cleaning device body. In such a configuration, the obstacle avoidance accuracy is ensured while the cost of obstacle avoidance is reduced.

According to a further aspect of the embodiment of the present application, a cleaning system is provided. The cleaning system includes: the automatic cleaning device in any one of the technical solutions as described above; and a cleaning base station for providing maintenance to the automatic cleaning device.

Because the cleaning system provided in the embodiment of the present application includes the automatic cleaning device in any one of the technical solutions as described above, the cleaning system has all the beneficial effects of the automatic cleaning device in the any one of the technical solutions as described above, the details of which will not be repeated here.

When the cleaning system provided in the embodiment of the present application executes a cleaning operation, the automatic cleaning device may be far away from the cleaning base station to execute the cleaning task, and when the automatic cleaning device completes cleaning or needs to be maintained, the automatic cleaning device may return to the cleaning base station, which may perform charging, mop washing, dust collection or water replenishing for the automatic cleaning device.

In some examples, the electronic device may further include a user interface, a network interface, a camera, a radio-frequency (Radio Frequency, RF) circuit, a sensor 1221, an audio circuit, a WI-FI module and the like. The user interface may include a display(Display), an input unit such as a keyboard(Keyboard), or the like, and optionally, may further include a USB interface, a card reader interface and the like. Optionally, the network interface may include a standard wired interface, a standard wireless interface (such as a WI-FI interface) and the like.

In an exemplary embodiment, the electronic device may further include an inputoutput interface and a display device, with respective functional units capable of communicating with each other via a bus. The memory 510 stores a computer program 420, and the processor 520 is used for executing the program stored on the memory 510 to execute the method in the above embodiments.

The storage medium may further include an operating system and a network communication module. The operating system is the program that manages the hardware and software resources of the physical device described above, and supports the running of information processing programs and other software and/or programs. The network communication module is used for implementing the communication between various components inside the storage medium, as well as the communication between other hardware and software in the physical information processing device.

Based on the description of the embodiments above, those skilled in the art can clearly understand that the present application can be implemented by virtue of software plus a necessary general-purpose hardware platform, or by hardware.

The present application is described with reference to the flowchart and/or block diagram of the method, device (system), and computer program 420 product according to the embodiments of the present application. It should be understood that individual processes and/or blocks, and their combinations, in the flowchart and/or block diagram can be implemented by the instructions of the computer program 420. These instructions of the computer program 420 may be provided to a general-purpose computer, a special-purpose computer, an embedded computer, or a processor 520 of an additional programmable data processing device to produce a machine, such that a device for implementing the function(s) specified in one or more processes in the flowchart and/or in one or more blocks in the block diagram is produced by means of the instructions executed by the computer or the processor 520 of the additional programmable data processing device.

In the present disclosure, the terms "first", "second" and "third" and "fourth" are for descriptive purposes only, and should not be construed as indicating or implying relative importance. The term "a plurality of" indicates two or more, unless otherwise clearly defined. The terms such as "installation", "coupling", "connection", and "fixation" should be understood in a broad sense. For example, "connection" may be a fixed connection, or a detachable connection, or an integrated connection; and "coupling" may be coupling directly, or indirectly via an intermediate medium. For those of ordinary skill in the art, the specific meanings of the above terms in the present disclosure can be understood according to specific conditions.

In the description of the present disclosure, it should be understood that the terms such as "up", "down", "left", "right", "front" and "back" indicate orientational or positional relations based on the orientational or position relations shown in the accompanying drawings only for the purposes of describing the present disclosure and simplifying the description, instead of indicating or implying that a mentioned apparatus or element must have a specific direction or must be constructed and operated in a specific orientation. Therefore, these terms should not be understood as a limitation to the present disclosure.

In the description of this Specification, the descriptions of terms such as "one embodiment", "some embodiments", "specific embodiments", "specific examples" or "some examples" or the like mean that the specific features, structures, materials or characteristics described in conjunction with the embodiment or example are included in at least one embodiment or example of the present disclosure. In this specification, the schematic expressions of the above terms do not necessarily refer to the same embodiment or example. Moreover, the described specific features, structures, materials, or characteristics can be combined in an appropriate manner in any one or more embodiments or examples.

Described above are merely preferred embodiments of the present disclosure, and are not intended to limit the present disclosure. Various modifications and variations can be made to the present disclosure for those skilled in the art. Any modification, equivalent substitution, improvement and the like made within the spirit and principle of the present disclosure shall be construed as being included within the protection scope of the present disclosure.

**Claims**

1. An automatic cleaning device, comprising:

   an automatic cleaning device body; and
   a sensing module, wherein the sensing module is disposed on the automatic cleaning device body, and comprises a line laser module and an RGB image acquisition module, the line laser module being configured for emitting a line laser, and an emission direction of the line laser being horizontally and downward inclined; and
   wherein the line laser module comprises an emission assembly configured for emitting a single-line laser.

2. The automatic cleaning device according to claim 1, wherein
   the RGB image acquisition module is configured for acquiring environmental image information of the automatic cleaning device body as second image information.

3. The automatic cleaning device according to claim 1, further comprising:
   a processor, wherein the processor is connected to the line laser module and the RGB image acquisition module, and configured for executing an obstacle avoidance strategy based on information obtained from the line laser module and the RGB image acquisition module.

4. The automatic cleaning device according to claim 1, wherein the line laser module further comprises:
   a receiving assembly configured for acquiring first image information of the laser on an object.

5. The automatic cleaning device according to claim 4, wherein the emission assembly comprises:

   a drive circuit unit; and
   a vertical cavity surface-emitting laser (VCSEL) unit, wherein the drive circuit unit is connected to the VCSEL unit, the VCSEL unit is configured for emitting the laser, and the drive circuit unit is configured for driving the VCSEL unit to emit the laser.

6. The automatic cleaning device according to claim 5, wherein the emission assembly further comprises:

   a focusing lens unit configured for focusing the laser emitted via the VCSEL unit; and
   a wave lens unit disposed on a side of the focusing lens unit away from the VCSEL unit;
   wherein the wave lens unit is configured for projecting a focused laser in a linear shape.

7. The automatic cleaning device according to claim 4, wherein the receiving assembly comprises:

   a sensor;
   a lens unit configured for imaging the line laser reflected by the object on the sensor;
   a filter unit disposed on a side of the lens unit away from the sensor; and
   a signal processing unit connected to the sensor, and configured for converting a photoelectric signal into a digital signal.

8. The automatic cleaning device according to any one of claims 1 to 7, wherein the sensing module further comprises:

   a housing connected to the automatic cleaning device body; and
   a bracket configured for connection to the housing,
   wherein the line laser module and/or the RGB image acquisition module are connected to the bracket.

9. The automatic cleaning device according to claim 8, wherein the sensing module further comprises:
   a fill-in light connected to the bracket and configured for filling light for the RGB image acquisition module.

10. The automatic cleaning device according to claim 9, further comprising:
    a protective lens configured for covering at least one of the RGB image acquisition module, the fill-in light, and the line laser module.

11. The automatic cleaning device according to claim 10, wherein
    a hollow-out portion is formed in a region of the protective lens corresponding to the fill-in light.

12. The automatic cleaning device according to claim 8, wherein
    a mounting hole is formed in the housing, and the line laser module and/or the RGB image acquisition module send or receive a signal via the mounting hole.

**13.** The automatic cleaning device according to claim 8, wherein the sensing module further comprises:
a pile-finding light receiving module configured for receiving a pile-finding signal emitted by a base station.

**14.** The automatic cleaning device according to claim 13, wherein
the pile-finding light receiving module is disposed on the bracket.

**15.** A cleaning system, comprising:

the automatic cleaning device according to any one of claims 1 to 14; and
a cleaning base station configured for providing maintenance to the automatic cleaning device.

**Fig. 1**

**Fig. 2**

Emission assembly 121

Drive circuit unit 1211

VCSEL unit 1212

Focusing lens unit 1213

Wave lens unit 1214

Receiving assembly 122

Signal processing unit 1224

Sensor 1221

Lens unit 1222

Filter unit 1223

Detected obstacle

**Fig. 3**

1214

**Fig. 4**

**Fig. 5**

**Fig. 6**

| Controlling an emission assembly to emit a laser inclining in a ground-hitting direction | 201 |
| :--- | :--- |
| Determining obstacle position information based on first image information of the laser on an object | 202 |

**Fig. 7**

**Fig. 8**

2.5ms Exposure    2.5ms Exposure    2.5ms Exposure 2.5ms Exposure    2.5ms Exposure    2.5ms Exposure

| Receiving assembly 120 | 33ms | 33ms | 33ms | 33ms | 33ms |

2.5ms Exposure    2.5ms Exposure    2.5ms Exposure 2.5ms Exposure    2.5ms Exposure    2.5ms Exposure

| Emission assembly 110 | 33ms | 33ms | 33ms | 33ms | 33ms |

2.5ms Exposure            2.5ms Exposure            2.5ms Exposure

| Emitting a laser | 66ms | 66ms |

**Fig. 9**

Computer-readable storage
medium 410

Computer Program 420

**Fig. 10**

Electronic device

Memory 510

Processor 520

**Fig. 11**

## INTERNATIONAL SEARCH REPORT

| International application No. |
|---|
| **PCT/CN2024/113125** |

**A. CLASSIFICATION OF SUBJECT MATTER**

A47L11/24(2006.01)i; A47L11/40(2006.01)i; H01S3/02(2006.01)i

According to International Patent Classification (IPC) or to both national classification and IPC

**B. FIELDS SEARCHED**

Minimum documentation searched (classification system followed by classification symbols)

IPC:A47L11/-; G05D1/-; G01S7/-; G01S17/-; H01S3/-

Documentation searched other than minimum documentation to the extent that such documents are included in the fields searched

Electronic data base consulted during the international search (name of data base and, where practicable, search terms used)

CNTXT, CNKI, ENTXTC, ENTXT, DWPI, WPABS, WPABSC: 激光, 激光雷达, 线激光, 线形, 单线, 单光束, RGB, 图像采集, 摄像, 镜头, 传感器, 图像, 避障, laser radar, line laser, imag+, camera, lens, sensor, obstacle avoidance

**C. DOCUMENTS CONSIDERED TO BE RELEVANT**

| Category* | Citation of document, with indication, where appropriate, of the relevant passages | Relevant to claim No. |
|---|---|---|
| X | CN 113960562 A (ECOVACS ROBOTICS CO., LTD.) 21 January 2022 (2022-01-21) description, paragraphs [0046]-[0136], and figures 1a-2f | 1-8, 12, 15 |
| Y | CN 113960562 A (ECOVACS ROBOTICS CO., LTD.) 21 January 2022 (2022-01-21) description, paragraphs [0046]-[0136], and figures 1a-2f | 9-11, 13-14 |
| Y | CN 112909712 A (BEIJING ROBOROCK TECHNOLOGY CO., LTD.) 04 June 2021 (2021-06-04) description, paragraphs [0044]-[0124], and figures 1-5 | 9-11, 13-14 |
| X | CN 219126194 U (SHENZHEN SILVER STAR INTELLIGENT GROUP CO., LTD.) 06 June 2023 (2023-06-06) description, paragraphs [0028]-[0053], and figures 1-2 | 1-5, 7, 15 |
| A | CN 111164453 A (WAYMO LLC) 15 May 2020 (2020-05-15) entire document | 1-15 |
| A | CN 114076953 A (UBTECH ROBOTICS CORP., LTD.) 22 February 2022 (2022-02-22) entire document | 1-15 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **15 October 2024** | **21 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/113125** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2019293765 A1 (SOS LAB CO., LTD.) 26 September 2019 (2019-09-26) entire document | 1-15 |

Form PCT/ISA/210 (second sheet) (July 2022)

## INTERNATIONAL SEARCH REPORT
### Information on patent family members

International application No.

**PCT/CN2024/113125**

| Patent document cited in search report | | | Publication date (day/month/year) | Patent family member(s) | | | Publication date (day/month/year) |
|---|---|---|---|---|---|---|---|
| CN | 113960562 | A | 21 January 2022 | CN | 215897823 | U | 22 February 2022 |
| | | | | WO | 2023020174 | A1 | 23 February 2023 |
| | | | | EP | 4385384 | A1 | 19 June 2024 |
| | | | | US | 2024197130 | A1 | 20 June 2024 |
| CN | 112909712 | A | 04 June 2021 | WO | 2022188366 | A1 | 15 September 2022 |
| | | | | EP | 4307496 | A1 | 17 January 2024 |
| | | | | US | 2024184304 | A1 | 06 June 2024 |
| CN | 219126194 | U | 06 June 2023 | | None | | |
| CN | 111164453 | A | 15 May 2020 | WO | 2019032243 | A1 | 14 February 2019 |
| | | | | US | 2019052844 | A1 | 14 February 2019 |
| | | | | US | 10447973 | B2 | 15 October 2019 |
| | | | | US | 2020169701 | A1 | 28 May 2020 |
| | | | | US | 10951864 | B2 | 16 March 2021 |
| | | | | US | 2023032410 | A1 | 02 February 2023 |
| | | | | US | 11838689 | B2 | 05 December 2023 |
| | | | | EP | 3658950 | A1 | 03 June 2020 |
| | | | | US | 2024080414 | A1 | 07 March 2024 |
| | | | | US | 2021185281 | A1 | 17 June 2021 |
| | | | | US | 11470284 | B2 | 11 October 2022 |
| | | | | CN | 111164453 | B | 29 December 2023 |
| | | | | CN | 117849763 | A | 09 April 2024 |
| CN | 114076953 | A | 22 February 2022 | CN | 216561003 | U | 17 May 2022 |
| US | 2019293765 | A1 | 26 September 2019 | US | 2023146379 | A1 | 11 May 2023 |
| | | | | US | 11579254 | B2 | 14 February 2023 |
| | | | | KR | 20190014313 | A | 12 February 2019 |
| | | | | KR | 102050632 | B1 | 03 December 2019 |
| | | | | WO | 2019027100 | A1 | 07 February 2019 |

Form PCT/ISA/210 (patent family annex) (July 2022)

## EP 4 767 899 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202322318458